# EUROPEAN PATENT SPECIFICATION

(11) **EP 3 268 318 B1**
(45) Date of publication and mention of the grant of the patent: **11.11.2020**
(21) Application number: 16764267.7
(22) Date of filing: 14.03.2016
(51) Int. Cl.: C02F 3/32

(54) **PLANTED BIOLOGICAL SYSTEM WITHOUT DRAINAGE FOR TREATMENT OF CONTAMINATED WATER**
BEPFLANZTES BIOLOGISCHES SYSTEM OHNE DRAINAGE ZUR BEHANDLUNG VON VERUNREINIGTEM WASSER
SYSTÈME BIOLOGIQUE PLANTÉ DÉPOURVU DE DRAINAGE DESTINÉ AU TRAITEMENT D'EAU CONTAMINÉE

(30) Priority: 13.03.2015 DK 201500160
(43) Date of publication of application: 17.01.2018
(73) Proprietor: SBR.Innovation v/S. B. Rasmussen, 4736 Karrebæksminde (DK)
(72) Inventor: RASMUSSEN, Steen Brabrand, 4736 Karrebæksminde (DK)
(74) Representative: Zacco Denmark A/S
(86) International application number: PCT/DK2016/050070
(87) International publication number: WO 2016/146131

(56) References cited:
- EP-A1- 2 360 123
- DE-A1- 19 960 400
- DE-A1-102011 051 932
- DE-U1- 29 613 235
- DE-U1- 29 622 246
- DE-U1-202005 008 113
- US-A- 2 029 268
- US-A- 5 829 192
- US-A1- 2006 086 651
- STUBSGAARD ET AL: "Danske Pileanlaeg", ØKOLOGISK BYFORNYELSE OG SPILDEVANDSRENSNING, MILJØSTYRELSEN,, 1 January 2001 (2001-01-01), XP009506275,
- A. Holtze ET AL: "Erfaringer fra og undersøgelser af pilerensningsanlaeg i Tappernøje", ØKOLOGISK BYFORNYELSE OG SPILDEVANDSRENSNING, vol. 17, 1 January 2001 (2001-01-01), XP055485517, Retrieved from the Internet: URL:https://www.researchgate.net/profile/A rne_Backlund/publication/271507818_Experie nce_and_Investigations_from_a_Willow_Evapo transpiration_Bed_Without_Outlet_in_Tapper noje_Denmark/links/54c96d180cf298fd2625d09 d/Experience-and-Investigations-from-a-Wil low-Evapotranspiration-Bed-Without-Outlet- in-Tappern [retrieved on 2018-06-19]
- STUBSGAARD, A.: 'Danske Pileanlæg' ØKOLOGISK BYFORNYELSE OG SPILDEVANDSRENSNING, MILJøSTYRELSEN 2001, XP009506275
- HOLTZE, A. ET AL.: 'Erfaringer fra og undersøgelser af pilerensningsanlæg i Tappernøje' ØKOLOGISK BYFORNYELSE OG SPILDEVANDSRENSNING 2001, XP055485517

## Description

The present innovation concerns a planted, biological system without drainage for treatment of contaminated water.

Planted wastewater treatment works without drainage are known, described and widely established, for instance:
Holtze, A. et al.: "Erfaringer fra og undersøgelser af pilerenseanlægget i Tappernøje", Økologisk byfornyelse og Spildevandsrensning, Miljøstyrelsen, Nr. 17, 2001,
Stubsgaard, A.: "Danske Pileanlæg" Økologisk Byfornyelse og Spildevandsrensning, Miljøstyrelsen, Nr. 5, 2001.

It is known from the above art, that an excavation of a suitable size is established, which is lined with a fiber textile + waterproof cloth, a drainage layer and a number of plastic cassettes in the lengthwise direction of the installation, comprising a distributing pipe with a number of circular holes executed with a suitable distance in the lengthwise direction of the distributing pipe, where waste water is supplied from a wet well established after a septic tank. The distributing pipe is placed in the plastic cassettes inside the installation, which is subsequently covered with fiber textile and then covered with soil. The supply of the waste water is established through a waterproof induction of the feeding pipe to the dewatering well, typically in the middle of the installation.

The installation is subsequently planted on each side of the plastic cassettes with 6 rows of willow clones with different characteristics. These installations are known in widths of 4, 6 and 8 meters.

Furthermore, it is a common technique to establish the aforementioned without geomembrane and fiber cloth, where the root system of the fiber cloth also as in the aforementioned, will absorb and transform parts of the waste water into wood biomass, and the water evaporates to the environment through the foliage.

The problem with the above mentioned, prior art is in part, that the establishment of a septic tank partly involves a considerable expense, and partly that the septic tank needs continuous maintenance, in particular emptying at regular intervals, which implies running costs. Besides this, the feeding pipe has been sunk in order to supply the waste water at the bottom by the drainage layer and is therefore difficult to access, once the installation has been established. It is thus relatively inaccessible, should the pipes become clogged.

According to the existing innovation, these problems are overcome by establishment of an installation according to claim 1.

It is thereby possible to spare the septic tank and the related inconveniences. Furthermore, the distributing pipe will be more easily accessible, should this become clogged, since it has not been sunk deeply. The accessibility is further increased, once the planting according to a preferred implementation has been provided around the central excavation and not above, as in the prior art. This accessibility will also be significant, if the decommissioning of an installation is desired, for instance at end of life, since all the non biodegradable material, except from various wells, is found at the surface. Thus, there will be no considerable amount of deep plastic materials in need of removal.

According to the invention, the distributing pipe comprises elastic, self-sealing lips, which mainly extend in a longitudinal direction of the distributing pipe. These elastic, self-sealing lips have proven to be suitable for the passing of larger, solid contamination parts, which may have evaded the grinding.

According to yet another implementation, the selected biomass is straw, preferably in the shape of bales. Straw is inexpensive and has a suitable porosity for seepage of the water, and furthermore allows for a certain storage of the water. Besides this, bales of straw are regular items, which allow for an easy placement in an elongated excavation.

According to yet another preferred implementation, the excavation is lined with a fiber cloth. This is placed between the repositioned soil and the waterproof membrane, by which the risk of cutting of the waterproof membrane is reduced. It is furthermore prevented, that the surrounding soil will eventually move to the middle of the installation, as the bales of straw are decomposed over time. According to one implementation, the fiber cloth can be fixed to the mesh reinforcement prevent this from sliding to the middle of the installation. Vertical slots are provided in the lower 1/3 of the fiber cloth, so that the root system of the planting can penetrate to the seeping nutrients from the waste water.

According to yet another preferred implementation, the planting comprises willow (Salix) and/or alder (Alnus glutinosa). The latter of the two has the specific advantage, that it withstands having roots in water containing a considerable amount of fertilizer.

According to yet another preferred implementation, the excavation is covered by a mesh reinforcement. The mesh reinforcement serves the purpose of mounting the distributing pipe and securing its position, once the biomass within the excavation collapses over time. Furthermore, a cavity is under the mesh reinforcement is hereby obtained, which covers the excavation, and which in turn ensures that the roots from the planting around the excavation do not intrude and clog the feeding pipe. In this connection it is particularly beneficial, if the mesh reinforcement is vaulted, since it will then better support the weight of the layer of soil covering the distributing pipe, according to yet another implementation. For this canopy, the removed soil from the excavation can be employed with advantage.

The invention will now be described further based on non-limiting, specific implementations and with reference to the illustration. The illustrations shows
fig. 1: a perspective of a section of an installation according to the invention,
fig. 2: a cross section through an installation according to a first embodiment of the invention,
fig. 3: a cross section through an installation according to a first embodiment of the invention,
fig. 4: a perspective with a cross section through the installation in fig. 3,
fig. 5: a perspective of a section of different layers in the implementation in fig. 2,
fig. 6: a perspective of a section of the implementation in fig. 2 with a manhole,
fig. 7: a section of a distributing pipe with closed slot, and
fig. 8: a section of a distributing pipe with open slot.

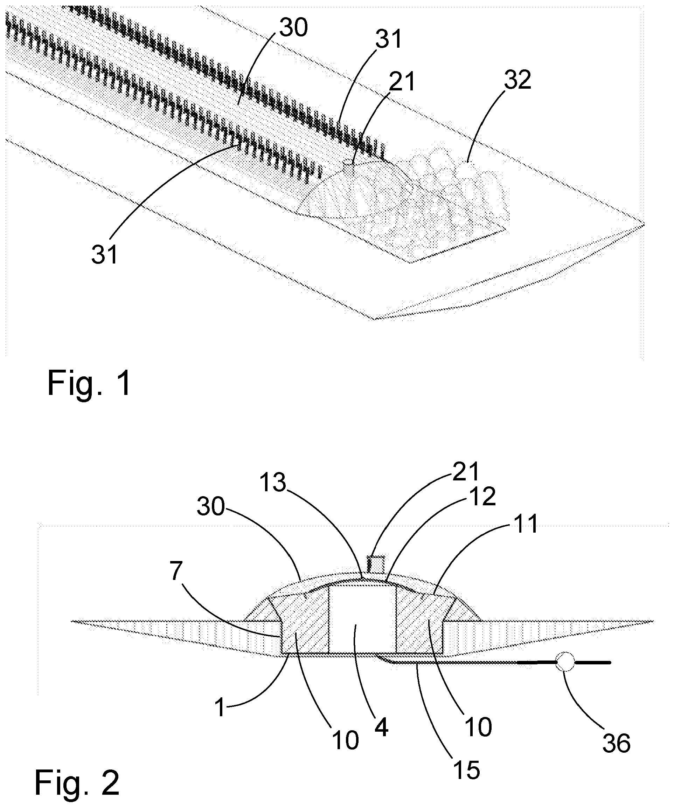

An installation is illustrated according to the invention, with fig. 1 as the point of departure. Particularly, an elongated embankment 30 with a planting 31 in each side is shown in bird's eye view. The planting 31 is preferably a fast growing tree species, such as willow (Salix). At the end, another planting 32 is seen. This planting could also be willow, but in order to demonstrate an alternative, has been illustrated in the shape of alder (Alnus glutinosa). The plantings 31 and 32 are not limited to these species, but could comprise of other tree species, or consist of a mixed planting of several species, e.g. a mixture of willow and alder.

A manhole 21 is seen at the end of the elongated embankment. The manhole is shown in detail in fig. 2, illustrating a cross section through a first embodiment of an installation according to the invention.

The installation is established in an excavation 33. According to the invention, the width of the excavation is typically 4 - 6 m. The purification capacity can be adjusted by a corresponding adjustment of the length, which could for instance be 50 m, but in principle, the length has no limitation.

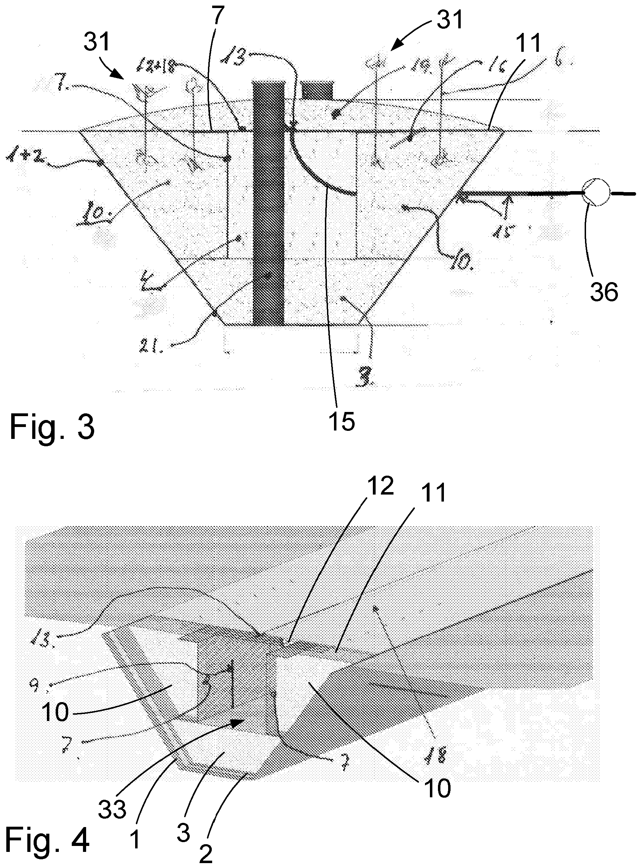

The excavation 33 itself is lined as in the prior art with fiber cloth 2 and a waterproof membrane 1. Instead of the plastic cassettes of the prior art, a layer of soil can be laid down as shown in fig. 3 and 4, or sand 3 has been replaced in the bottom of the excavation. In the central part of the excavation, a core of selected biomass has been placed over the layer of soil or sand 3, such as compressed straw in the shape of a row of bales 4, which has been lowered longitudinally for the length of the excavation.

According to the invention, the sides of the bales are covered with fiber textile 7 or a net, which has been placed over half of the sides of the bales prior to the repositioning of soil, in order to prevent the surrounding soil from moving to the middle of the installation over time. This fiber textile 7 or net is preferably fixed to the mesh reinforcement 12, so that is position is secured, when over time the surrounding soil moves to the middle of the installation.

In the bottom, where the soil is to be repositioned, the fiber cloth 7 is placed over the aligned layer of soil or sand 3 according to the invention, as is illustrated in the best way in fig. 4. A number of vertical slots 9 are cut into the bottom 1/3, typically corresponding to 50 cm, with an intermediate distance between them throughout the entire length, so that the willow roots can also work their way into the middle of the installation over time. The activity and transport of oxygen of the willow roots into the installation reduces the development of hydrogen sulfide. Simultaneously, the biodegradability process is considerably enhanced.

Subsequently, and according to the invention, the soil 10 is repositioned until the stowage reaches the height of the bales 4, where it is aligned, and the flap, which was placed over half of the bales is then placed over the aligned soil 11.

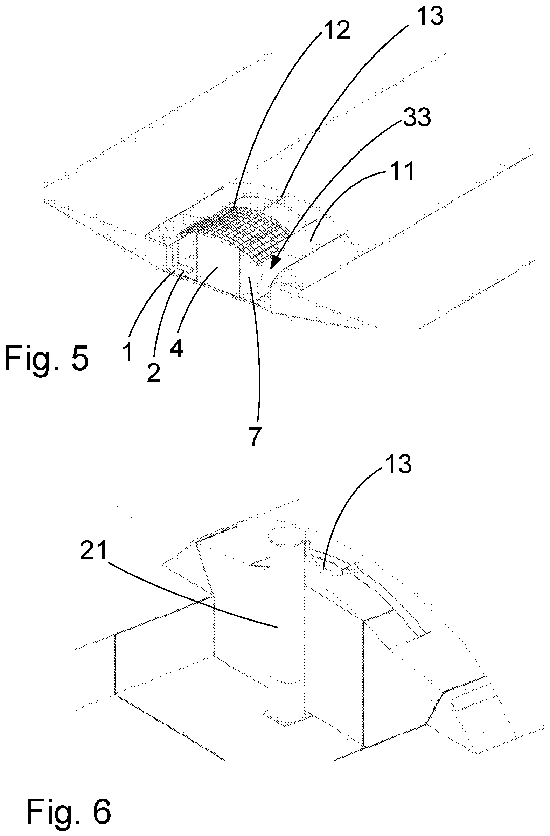

As seen in fig. 5, it is possible in an alternative implementation to place the cloth and the bales directly at the bottom of the excavation in stead of filling up and aligning a layer of soil or sand 3.

According to the invention, a number of coated mesh reinforcements 12 have been placed over the aligned layer of soil 11, so that they cover pales the alignment and the flap of the fiber textile. On the mesh reinforcement 12, at least one flexible distributing pipe 13 has been mounted, pereferably in the middle of the installation.

The distributing pipe 13 has lip-shaped, longitudinal cuts in the shape of slots 34, so that lips 35 are formed, and is mounted at the mesh reinforcement 12 with these cuts pointing downwards and longitudinally in the installation. The distributing pipe is connected to the discharge pipe 15 on a grinder pump 36. In case of several distributing pipes 13, or if the distributing pipe 13 is long, it is possible to establish an attachment point in a T or Y 14 at the middle of the attachment pipe, which is then connected to the discharge pipe from the grinder pump 36, which is fed into the installation in a tight bushing. The grinder pump 36 can be placed in a wet well in connection with the installation, but in principle could also be placed elsewhere at a distance from the installation or in one of the manholes 21. Regardless of the placement, the grinder pump 36 is however always placed at a lower position than the distributing pipe 13.

The mesh reinforcements can be fixed with a suitable number of plugs 16, or the ends can be bent by 90 degrees into the aligned layer of soil. Subsequently, a fiber cloth 18 is placed over the mesh reinforcements 12 for the entire length of the installation. Fiber cloth 18 and mesh reinforcement 12 is covered with soil, preferably by repostioning the remainder of the dug out soil, so that the middle of the installation is taller than the external part of the installation.

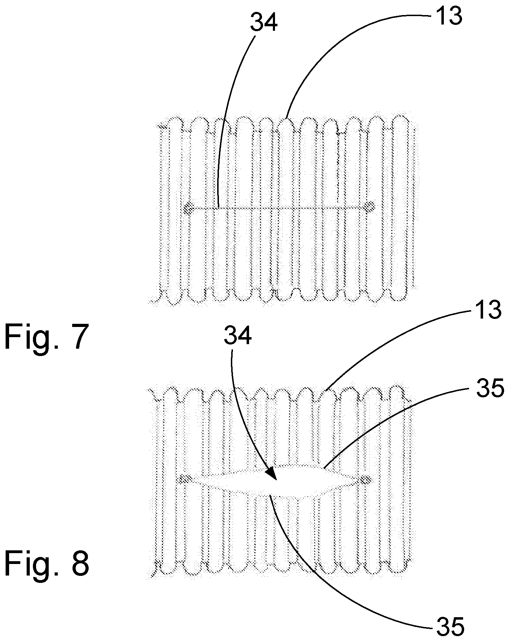

As seen in fig. 7 and 8, according to the invention, the distributing pipe 13 has an elastic and flexible wall, which, as mentioned, has a number of longitudinal slots 34, and thereby differs from the above mentioned art, which has a relatively hard wall with a number of non-elastic, circular holes. Thus, the distributing pipe 13 has longitudinal lips underneath, which open and close themselves automatically during the discharge of the blended wastewater from the grinder pump 36 due to the elasticity and the pump pressure, and allows for larger particles to be discharged into the installation. Once the pump pressure and discharge have been completed, the lips will close again. Since a cavity above the bales of straw 4 will be formed over time, once these are decomposed under the mesh reinforcement 12, the larger particles will easily be able to pass away from the distributing pipe 13.

At the same time, the position and closing function of the distributing pipe 13 on top of the mesh reinforcements 12 over the bales of straw 4 will mean, that the risk that the willow roots will enter into the lips of the discharge pipe is very small, since the biological material under the discharge pipe as mentioned above is decomposed and reduced, whereby according to the invention a cavity of air is formed up to this part, through which the roots cannot grow.

The placement over the bales of straw 4 furthermore offer the advantage, that the heat from the biological decomposition will rise and heat the distributing pipe 13. A freezing of the distributing pipe 13 is hereby prevented, even if this is placed relatively close to the surface, which has been an issue in the prior art. This phenomenon will not occur here, where warm air from the system will insulate and supply heat to the pipe.

Furthermore, there is no check valve in the system and pump/wet well, and the inlet pipe 15 is lower than the distributing pipe 13, as illustrated in fig. 2 and 3. Therefore, the inlet pipe 15 will be discharged at the back flow, once the pump 36 stops.

A manhole 21 with holes and surrounding fiber cloth is mounted at each end of the installation. The terminal points of the distributing pipe is led to the manhole and is sealed with a suitable plug valve 23. Thus, the distributing pipe 13 can be flushed if necessary, should this be clogged, contrary to expectation.

By the invention it is therefore achieved, that the black waste water or slurry is fed directly via a grinder pump 36 without septic tank to a flexible distributing pipe 13 for the entire length of the installation, which is equipped with longitudinal, self-sealing, and elastic, lip-shaped, downwards pointing slots/slits 34, instead of circular holes, which would be clogged. According to the invention, the configuration with elastic, lip-shaped slots 34 in the distributing pipe 13 means, that non-blended lumps such as micro plastics, or not entirely grinded segments, by an accumulation in the opening of the slot would open the flexible lips 35 as shown in fig. 8, as a result of the delivered pressure from the pump, and the content would thus be pressed out, and thereby fed to the upper side of the biomass contained within the installation, which, according to the invention, could for instance be bales. Once the pressure from the pump ceases, and the blended material has been delivered to the top of the bales, the lip will close again as a result of the elasticity in the wall of the tube, as shown in fig. 7. According to the invention, the longitudinal slots/slits 34 has varying lengths and distances between them, depending on the pressure drop in the distributing pipe 13, so that the same amount is pumped out per running meter at the ends, as in the center of the installation, where the pressure is at its highest.

Another benefit, which, according to the invention, is achieved by configuring the plastic distributing pipe 13 with the longitudinal, downwards pointing lips, that close again after the drainage, is that the roots of the planting, for instance willow or alder, only can penetrate into the pipe with great difficulty, even after several years of operation.

According to the invention, the argument for employing for instance bales in the middle of the installation, instead of plastic cassettes, is the price. At the same time, and according to the invention, a casing is achieved, where the fiber cloth as well as the rionet during establishment can be supported during the filling of soil in the rest of the installation.

Contrary to traditional installations with a septic tank, in which the content of a vacuum tanker must be removed regularly and transported to a central purification plant, and where the content of micro plastics in the slurry, which often is not decomposed, is pumped out from the central purification plant, where it contaminates the marine environment, the non-decomposable types of micro plastics, medicines and estrogens according to the invention are deposited in the installation, and blended with the soil particles of the installation, where the chance of a total or partial decomposition as the result of a long-term, biological activity during the operating life of the installation is substantial.

Another benefit achieved by the bales according to the invention, and at the initial start-up of the installation, is that it optimizes the decomposition of substances, the seeping through the bales and the blending to enhance the C/N-ratio, which supplies the installation with 80 - 100 atoms of carbon for each 8 - 10 atoms of nitrogen from the waste water. The root system of the willow clones transport oxygen so that the nitrification process of ammonium, NH4+ to nitrite(NO2-) to nitrate (NO3-) can take place. Alder is capable of binding nitrogen-fixing bacteria and using hemoglobin of aerating the nitrogen to nitrogenous compounds that are usable for the planting.

According to the invention, it is furthermore achieved, that during the biological process by the blending of waste water and straw, at heat is generated during the decomposition, which is spreading to the root system of the willow sets, creating enhanced growth conditions for the root system, which is thereby established much faster, than by the prior art with plastic cassettes mentioned in the introduction.

Furthermore, and according to the invention, the use of an inexpensive, biodegradable, carbonaceous material such as bales, results in a large pore volume in the installation from the beginning, and as this is gradually decomposed, the root system from the existing willow clones/alder in the plating of the installation will work their way into the mineralized, composted mass, though a number of vertical cuttings of the fiber cloth 9 and into the bales with an suitable space for the entire length of the installation.

According to the invention, the mesh reinforcements 12, which are corrosion protected and have been placed in the installation and fixed with plugs 16, be maintained within the installation as the root system of the willow clones and the willow clones themselves are established, so that the amount of soil above the mesh reinforcements can be extended as the installation settles.

According to the invention, the manholes 21 at the end can be mounted with a T-fitting 14 in a suitable distance under the mesh reinforcements 12 and into the biomass. The purpose of this T-fitting is to open the possibility for ventilating the biomass as this is decomposed, by ventilating the installation through the manholes, should this be desired.

According to the invention, the planting of the installation with willow clones/alder is most appropriately carried out in rows of 2x2 on each side of the center axis. It is then possible to harvest each side mechanically, for example every 3 - 4 years.

According to the invention, once the installation is implemented, then volume that the waste water can achieve, is 3 - 4 times larger as a result of the straw, which contains more air than soil, and thereby a larger pore volume.

The biological heating, which, according to the invention, is started by the waste water in the bales, can reach up to 70 degrees Celcius, and according to the invention, will provide a strongly enhanced initial growth to the area with the willow clones, where the soil will reach 20 - 30 degrees Celcius, instead of the 8 - 10 degrees in the prior art.

The entire installation can hereafter be planted with a low-growing species of grass, which will compete with shrubs, as it will be stimulated by the heat of the biological activity within the installation, or with a type of biodegradable corn plastic, placed in transverse strips that stops the growth of shrubs, in order for the rain water to reach the willow sets.

According to the invention, the two sides are subsequently planted with willow sets/alder, which, contrary to the prior art, must have a double length, so that it also penetrates the fiber textile in the inner row.

In order to ensure operation during possible diseases, that could strike willow, the ends are planted with alder instead of willow clones.

Since the installation is fed via the flexible distributing pipe with slot-spaced lips instead of circular holes as in the prior art, according to the invention, such a distributing pipe would be able to clean, evaporate and convert all of the waste water from a household without the use of a septic tank, with a supplied energy of <30W/m3. Furthermore, the risk of overflow during the first 1 - 2 years of commissioning would be almost non-existing, as a result of the very large pore volume in the installation.

A variation of the invention could be a mixture of leca or styropore balls in the soil at the middle of the installation in order to decrease the pressure on the mesh reinforcement 12, once the bales 4 are decomposed/composted together with the waste water.

Another variation is the use of vaulted mesh reinforcement 12 as shown in fig. 5 and 6, where the vaulted shape strengthens the mesh reinforcement 12 as compared to the flat mesh reinforcement 12 in fig. 1-4. Furthermore, the use of vaulted mesh reinforcements 12 entails, that a canopy with soil and especially fiber cloth is and will continue to be vaulted. Thus, rain water will be more able to drain off from the sides and benefit the planting, instead of penetrating and straining the central part of the installation with unnecessary amounts of water.

Thus, the invention concerns a low-energy, planted biological installation for conversion/purification/depositing of black waste water or slurry without drainage. Characterized by not being connected to septic tank, but is fed via a wet well directly with blended, black waste water from a grinder pump, via a distributing pipe with elastic, self-sealing, longitudinal lips, where a biomass placed in the upper side of the installation is supplied with the blended waste water. The following is thereby provided:
a) Low energy, planted biological purification plant for conversion/purification of black waste water without drainage. Characterized by not being connected to septic tank, but is fed via a wet well directly with blended, black waste water from a grinder pump, via a distributing pipe with elastic, self-sealing, longitudinal lips, trough which the blended waste water is fed to the upper side of a biomass, placed within the installation.
b) Low energy, planted biological purification plant characterized by the fact, that the longitudinal lips point downwards and are opened by the pump pressure and of the accumulated, blended mass on the back side. Once the pump pressure ceases, the lip will close again. This means that roots from the planting cannot, or only with great difficulty can penetrate and block the lip.
c) Low energy, planted biological purification plant characterized by the fact, that the biomass placed within the installation can be, but is not limited to, bales of straw, which simultaneously at the establishment creates a casing, whereto a fiber cloth placed within the installation can be fastened for separation of the remaining soil in the sides of the installation.
d) Low energy, planted biological purification plant which forms a support for the installed steel mesh reinforcements, which are placed above the installation and must carry the canopy during the establishment phase, and subsequently, once the biomass is decomposed and no longer supports the canopy, must support the canopy.
e) Low energy, planted biological purification plant, where the biomass upon start-up of the installation with waste water is heated to 60 - 70 degrees as a result of strong biological activity, depending on the characteristics of the biomass, and thereby heats the surrounding soil, so that the growth of the planting is hereby accelerated substantially during the establishment phase.
f) Low energy, planted biological purification plant, where a pore volume within the installation as a result of the large amount of biomass (straw) instead of plastic cassettes and soil means, that a much larger volume of water can be accumulated in the sunk geomembrane within the installation, until the growth and the root system of the planting can absorb and evaporate nutrients and water.
g) Low energy, planted biological purification plant according to which the vertical cuttings of the fiber cloth between the biomass and the remaining soil allow for the root system of the planting to gradually work its way into the biological material and absorb the moisture, which is needed for the growth.
h) Low energy, planted biological purification plant, in which the combination of biomass and the root systems transportation of oxygen and the composition of the waste water reduces the development of hydrogen sulphide in the installation, while micro plastics from the waste water are simultaneously deposited in the soil particles within the installation and mixed with the released nutrients during decomposition.
i) Low energy, planted biological purification plant, in which the timewise enduring, biological activity of all parts of the black waste water in the installation means that medicines, estrogens and complex degradable parts of the waster water are decomposed very intensively as a result of the residence within the installation for up to 30 years.
j) Low energy, planted biological purification plant, in which the total energy consumption is <30W/m3.

## Claims

1. Planted, biological installation without drainage for treatment of contaminated water, comprising a planting (31), which comprises one or more selected tree species, wherein said planted, biological installation is **characterized by** not being connected to a septic tank, and by comprising:
a central excavation (33) part filled with a selected biomass (4),
a pump (36), which is designed to grind solid impurities in the contaminated water, and
at least one distributing pipe (13) comprising elastic, self-sealing lips (35, 35) extending longitudinally in relation to the distributing pipe (13), which is connected to the pump (36) and designed to supply the contaminated water to the upper side of the selected biomass (4).

2. Installation according to claim 1, in which the selected biomass (4) is straw, mainly in the shape of bales.

3. Installation according to any of the previous claims, in which the excavation (33) is lined by a fiber cloth (2).

4. Installation according to claim 3, in which vertical slots (9) have been provided in the fiber cloth (2).

5. Installation according to any of the previous claims, in which the planting (31) is provided around the central excavation (33).

6. Installation according to any of the previous claims, in which the planting (31) encompasses willow (Salix) and/or alder (Alnus glutinosa).

7. Installation according to any of the previous claims, in which the excavation (33) is covered by a mesh reinforcement (12).

8. Installation according to claim 7, in which the mest reinforcement (12) is vaulted.

9. Installation according to claims 7 or 8, in which the distributing pipe (13) is fixed to the mesh reinforcement (12).

10. Installation according to any of the previous claims, in which the distributing pipe (13) and the selected biomass (4) in the excavation (33) are covered by soil, preferably by the removed soil.

## Patentansprüche

1. Bepflanzte, biologische Installation ohne Drainage zur Behandlung von verunreinigtem Wasser, umfassend eine Bepflanzung (31), die eine oder mehrere ausgewählte Baumart(en) umfasst, wobei die bepflanzte, biologische Installation **dadurch gekennzeichnet ist, dass** sie mit keinem Klärtank verbunden ist, und dass sie Folgendes umfasst:
einen zentralen Ausgrabungsteil (33), der mit einer ausgewählten Biomasse (4) gefüllt ist,
eine Pumpe (36), die zum Zerkleinern von festen Verunreinigungen in dem verunreinigten Wasser ausgestaltet ist, und
mindestens eine Verteilerleitung (13), die elastische, selbstdichtende Lippen (35, 35) umfasst, die sich bezüglich der Verteilerleitung (13) in Längsrichtung erstrecken, die mit der Pumpe (36) verbunden ist und zum Zuführen des verunreinigten Wassers zur oberen Seite der ausgewählten Biomasse (4) ausgestaltet ist.

2. Installation nach Anspruch 1, bei welcher die ausgewählte Biomasse (4) Stroh, hauptsächlich in Form von Ballen, ist.

3. Installation nach einem der vorgehenden Ansprüche, bei welcher die Ausgrabung (33) mit einem Fasertuch (2) ausgekleidet ist.

4. Installation nach Anspruch 3, bei welcher vertikale Schlitze (9) in dem Fasertuch (2) vorgesehen sind.

5. Installation nach einem der vorgehenden Ansprüche, bei welcher die Bepflanzung (31) um die zentrale Ausgrabung (33) herum vorgesehen ist.

6. Installation nach einem der vorgehenden Ansprüche, bei welcher die Bepflanzung (31) Weide (Salix) und/oder Erle (Alnus glutinosa) umfasst.

7. Installation nach einem der vorgehenden Ansprüche, bei welcher die Ausgrabung (33) von einer Mattenbewehrung (12) abgedeckt ist.

8. Installation nach Anspruch 7, bei welcher die Mattenbewehrung (12) gewölbt ist.

9. Installation nach Anspruch 7 oder 8, bei welcher die Verteilerleitung (13) an der Mattenbewehrung (12) befestigt ist.

10. Installation nach einem der vorgehenden Ansprüche, bei welcher die Verteilerleitung (13) und die ausgewählte Biomasse (4) in der Ausgrabung (33) mit Erde, vorzugsweise mit der abgetragenen Erde, verschüttet sind.

## Revendications

1. Installation biologique plantée sans drainage pour le traitement des eaux contaminées, comprenant une plantation (31) qui comprend une ou plusieurs espèces d'arbres sélectionnées, dans laquelle l'installation biologique plantée est **caractérisée en ce qu'**elle n'est pas raccordée à une fosse septique, et **en ce qu'**elle comprend :
une partie centrale d'excavation (33) remplie d'une biomasse sélectionnée (4), une pompe (36) conçue pour broyer les impuretés solides dans l'eau contaminée, et
au moins un tuyau de distribution (13) comprenant des lèvres élastiques auto-obturantes (35, 35) s'étendant longitudinalement par rapport au tuyau de distribution (13) raccordé à la pompe (36) et conçu pour fournir les eaux contaminées au côté supérieur de la biomasse sélectionnée (4).

2. Installation selon la revendication 1, dans laquelle la biomasse choisie (4) est de la paille, essentiellement dans la forme de balles.

3. Installation selon l'une quelconque des revendications précédentes, dans laquelle l'excavation (33) est doublée d'un tissu de fibres (2).

4. Installation selon la revendication 3, dans laquelle des fentes verticales (9) ont été prévues dans le tissu de fibres (2).

5. Installation selon l'une quelconque des revendications précédentes, dans laquelle la plantation (31) est prévue autour de l'excavation centrale (33).

6. Installation selon l'une quelconque des revendications précédentes, dans laquelle la plantation (31) englobe du saule (Salix) et / ou de l'aulne (Alnus glutinosa).

7. Installation selon l'une quelconque des revendications précédentes, dans laquelle l'excavation (33) est recouverte par un treillis de renfort (12).

8. Installation selon la revendication 7, dans laquelle le treillis de renfort (12) est voûté.

9. Installation selon la revendication 7 ou 8, dans laquelle le tuyau de distribution (13) est fixé au treillis de renfort (12).

10. Installation selon l'une quelconque des revendications précédentes, dans laquelle le tuyau de distribution (13) et la biomasse sélectionnée (4) dans l'excavation (33) sont recouverts de sol, de préférence par le sol enlevé.
